# EUROPÄISCHE PATENTSCHRIFT

(11) **EP 1 211 013 B1**
(45) Veröffentlichungstag und Bekanntmachung des Hinweises auf die Patenterteilung: **01.08.2007**
(21) Anmeldenummer: 01125824.1
(22) Anmeldetag: 30.10.2001
(51) Int. Cl.: B23K 11/00, F16F 9/32, F16F 9/54

(54) **Verfahren zum Verbinden eines Befestigungsauges mit dem Boden eines Schwingungsdämpfers und Bausystem, umfassend ein Befestigungsauge und einen Boden**
Method of connecting of a fixing eye with the bottom of a vibration damper and construction system comprising a fixing eye and a bottom
Méthode de joindre d'un oeil de fixation avec le pied d'un amortisseur de vibrations et système de construction comprenant un oeil de fixation et un pied

(30) Priorität: 02.12.2000 DE 10060057
(43) Veröffentlichungstag der Anmeldung: 05.06.2002
(73) Patentinhaber: ThyssenKrupp Bilstein Suspension GmbH, 58256 Ennepetal (DE)
(72) Erfinder: Wiegand, Friedrich, 54290 Trier (DE)
(74) Vertreter: Adams, Steffen

(56) Entgegenhaltungen:
- DE-A- 1 630 449
- DE-A- 4 209 218
- DE-C- 19 634 117
- US-A- 2 106 272
- PATENT ABSTRACTS OF JAPAN vol. 010, no. 265 (M-515), 10. September 1986 (1986-09-10) & JP 61 088982 A (TOYOTA MOTOR CORP), 7. Mai 1986 (1986-05-07)

## Beschreibung

Die Erfindung betrifft eine Verbindung eines Befestigungsauges mit dem Boden eines Schwingungsdämpfers mittels Schweißen. Befestigungsaugen dienen zum Befestigen von Schwingungsdämpfern für Kraftfahrzeuge am Kraftfahrzeugaufbau und/oder an der Radaufhängung. Die Verbindung des Befestigungsauges mit dem Boden eines Schwingungsdämpfers muss nicht nur großen Belastungen standhalten, die Verbindung muss auch unbedingt sicher sein, da bei einer Zerstörung dieser Verbindung die Fahrsicherheit des Fahrzeuges nicht mehr gegeben wäre.

Es ist bekannt, Befestigungsaugen mit dem Boden eines Schwingungsdämpfers mittels Schweißen zu verbinden. Dabei werden die Befestigungsaugen als Ring hergestellt und vorzugsweise mittels Widerstands-Press-Schweißen oder Schutzgasschweißen mit dem Boden des Schwingungsdämpfers verbunden.

So ist beispielsweise aus der US-A- 2 106 272 bekannt, einen Befestigungsring mit dem Boden eines Schwingungsdämpfers durch Widerstands-Press-Schweißen zu verbinden. Hierzu wird der Befestigungsring gegen den Boden des Schwingungsdämpfers gepresst, sodass es aufgrund des Kontakts des Befestigungsrings mit dem Boden zu einer Schweißverbindung zwischen den einander kontaktierenden Oberflächen kommt.

Nachteilig bei den bisherigen Schweißverfahren ist die Notwendigkeit einer genauen Positionierung des Befestigungsauges am Boden, die nur unter hohem Vorrichtungsaufwand möglich ist, und weiterhin nachteilig ist nur eine geringe Dauerfestigkeit zu erreichen.

Der Erfindung liegt die Aufgabe zugrunde, den Vorrichtungsaufwand zu verringern und das Schweißverfahren sicherer zu gestalten.

Diese Aufgabe wird erfindungsgemäß mit den Merkmalen des Anspruchs 1 und den Merkmalen des Anspruchs 4 gelöst. Vorteilhafte Aus- und Weiterbildungen sind in den Unteransprüchen 2 und 3 sowie im Unteranspruch 5 angegeben.

Die mit der Erfindung erzielten Vorteile bestehen insbesondere darin, dass es nicht mehr erforderlich ist, die Schweißung unter Schutzgas vorzunehmen. Dieser Vorteil ergibt sich dadurch, dass das Schweißen beim Aufsetzen des Befestigungsauges auf die Seitenkanten der W-förmigen Nut beginnt. Von daher erfolgt das Schweißen von außen zum Zentrum hin. Durch die Ausbildung der Nut mit einer W-Form kommt später der sich V-förmig nach außen öffnende Längsstoß des Befestigungsauges mit der mittleren Erhebung der W-förmigen Nut in Verbindung. Das führt zum Abschluss der Schweißung zu einem seitlichen Formschluss. Dieser Formschluss führt zu einer erhöhten Dauerfestigkeit bei wechselnder Belastung.

Ein Ausführungsbeispiel der Erfindung ist in der Zeichnung dargestellt und wird im Folgenden näher beschrieben. Es zeigen
Fig. 1 die Ausbildung der Schweißnahtvorbereitung vor dem Schweißen und
Fig. 2 einen Schnitt durch den fertig verschweißten Schwingungsdämpfer.

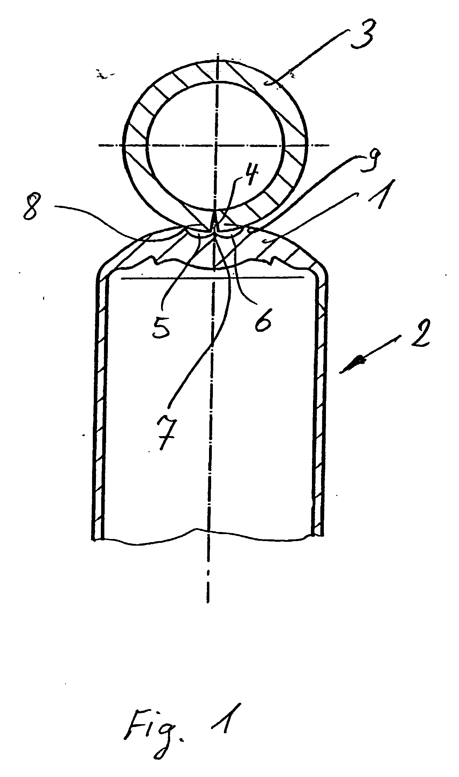

Ein Schwingungsdämpfer insbesondere für Kraftfahrzeuge weist einen mit einem Boden 1 versehenen Dämpferzylinder 2 auf. Mit dem Boden 1 wird ein Befestigungsauge 3 mittels Schweißen verbunden. Aus Fig. 1 ist die Schweißnahtvorbereitung von Boden 1 und Befestigungsauge 3 erkennbar. Das Befestigungsauge 3 wird vorzugsweise aus einem Streifen Flachmaterial durch Rollen oder Biegen hergestellt. Die Enden des Flachmaterials bilden nach dem Rollen oder Biegen einen sich V-förmig nach außen öffnenden Längsstoß 4. In den Boden 1 des Dämpferzylinders 2 wird durch Räumen oder Fräsen eine W-förmige Nut eingebracht. Diese W-förmige Nut setzt sich aus zwei nebeneinander liegenden Rundungen 5, 6 zusammen. Die Rundungen 5, 6 sind im Ausführungsbeispiel Radien mit gleicher Krümmung. Diese Form führt im Zentrum der W-förmigen Nut zu einer mittleren Erhebung 7. Vor dem Beginn der Schweißung werden Boden 1 und Befestigungsauge 3 in die in Fig. 1 dargestellte Position zueinander gebracht. Dabei liegt das Befestigungsauge 3 auf den Seitenkanten 8, 9 der Nut auf. Die Nut ist so bemessen, dass hierbei die Erhebung 7 das Befestigungsauge 3 nicht berührt. Die Erhebung 7 liegt etwa zentral gegenüber dem sich V-förmig nach außen öffnenden Längsstoß 4 des Befestigungsauges 3. Damit ist gewährleistet, dass beim vorgesehenen Widerstands-Press-Schweißen der Schweißvorgang von außen (den Seitenkanten 8, 9) beginnend nach innen zur Erhebung 7 fortschreitend erfolgt. Da dadurch die Erwärmung der Erhebung 7 erst ganz zum Schluss erfolgt, kommt es zu einem Formschluss zwischen der Erhebung 7 und dem Längsstoß 4.

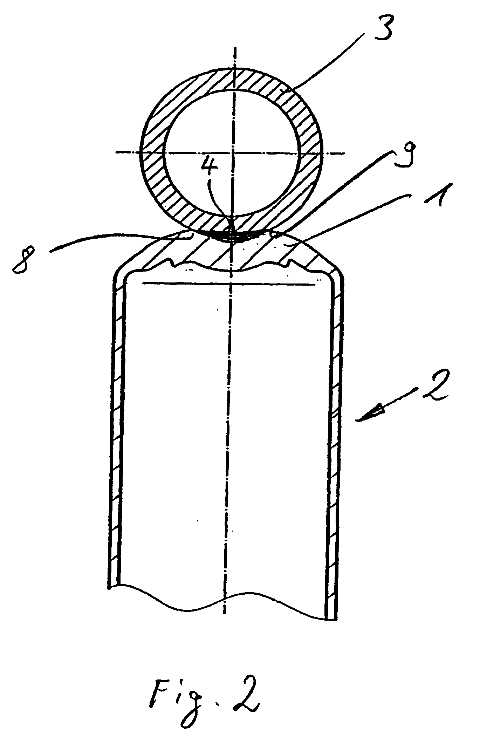

Die fertige Schweißung ist in Fig. 2 dargestellt. Je nach den gewählten Schweißkriterien ist der Längsstoß 4 mehr oder weniger mit Schweißgut gefüllt. Das Zusammenschweißen des Dämpferzylinders 2 am Längsstoß 4 ist für die Haltbarkeit der Schweißverbindung von untergeordneter Bedeutung.

### Bezugszeichenliste

- 1.: Boden
- 2.: Dämpferzylinder
- 3.: Befestigungsauge
- 4.: Längsstoß
- 5.: Rundung
- 6.: Rundung
- 7.: Erhebung
- 8.: Seitenkante
- 9.: Seitenkante

## Patentansprüche

1. Verfahren zum Verbinden eines Befestigungsauges (3) mit dem Boden (1) eines Schwingungsdämpfers mittels Schweißen, **dadurch gekennzeichnet, dass** vor dem Schweißen
- das Befestigungsauge (3) vorzugsweise durch Rollen oder Biegen aus einem Streifen Flachmaterial hergestellt ist und einen sich V-förmig nach außen öffnenden Längsstoß (4) aufweist,
- der Boden (1) eine quer verlaufende, sich aus zwei Rundungen (5, 6) zusammensetzende W-förmige Nut aufweist, deren Tiefe und mittlere Erhebung (7) so bemessen ist, dass das Befestigungsauge (3) auf den Seitenkanten (8, 9) der W-förmigen Nut aufliegt und
- der V-förmige Längsstoß (4) des Befestigungsauges (3) zentral oder nahezu zentral über der mittleren Erhebung (7) der W-förmigen Nut liegt.

2. Verfahren nach Anspruch 1, **dadurch gekennzeichnet, dass** das Schweißen durch Widerstands-Press-Schweißen erfolgt.

3. Verfahren nach Anspruch 1 oder Anspruch 2, **dadurch gekennzeichnet, dass** die Rundungen (5, 6) der W-förmigen Nut durch Radien, vorzugsweise Radien mit gleicher Krümmung gebildet werden.

4. Bausystem, umfassend ein Befestigungsauge (3) und einen Schwingungsdämpfer mit einem Boden (1), dessen Form abschnittsweise der Form des Befestigungsauges (3) angepasst ist, **dadurch gekennzeichnet, dass**
- das Befestigungsauge (3) vorzugsweise durch Rollen oder Biegen aus einem Streifen Flachmaterial hergestellt ist und einen sich V-förmig nach außen öffnenden Längsstoß (4) aufweist,
- der Boden (1) eine quer verlaufende, sich aus zwei Rundungen (5, 6) zusammensetzende W-förmigen Nut aufweist, deren Tiefe und mittlere Erhebung (7) so bemessen ist, dass das Befestigungsauge (3) auf den Seitenkanten (8, 9) der W-förmigen Nut aufliegt und
- der V-förmige Längsstoß (4) des Befestigungsauges (3) zentral oder nahezu zentral über der mittleren Erhebung (7) der W-förmigen Nut liegt.

5. Bausystem nach Anspruch 4, **dadurch gekennzeichnet, dass** die Rundungen (5, 6) der W-förmigen Nut durch Radien, vorzugsweise Radien mit gleicher Krümmung gebildet werden.

## Claims

1. Method for connecting a fixing eyelet (3) to the base (1) of a vibration damper by means of welding, **characterised in that** prior to welding:
- the fixing eyelet (3) is preferably produced from a strip of flat material by means of rolling or bending and comprises a longitudinal joint (4) which opens outwards in a V-shaped manner,
- the base (1) comprises a transversely-extending W-shaped groove which is composed of two rounded edges (5, 6) and whose depth and central elevation (7) are dimensioned such that the fixing eyelet (3) is supported on the lateral edges (8, 9) of the W-shaped groove, and
- the V-shaped longitudinal joint (4) of the fixing eyelet (3) is located centrally or almost centrally over the central elevation (7) of the W-shaped groove.

2. Method as claimed in Claim 1, **characterised in that** welding is effected by means of resistance-pressure welding.

3. Method as claimed in Claim 1 or Claim 2, **characterised in that** the rounded edges (5, 6) of the W-shaped groove are formed by radii, preferably radii having the same curvature.

4. Structural system comprising a fixing eyelet (3) and a vibration damper having a base (1) whose shape is adapted in sections to the shape of the fixing eyelet (3), **characterised in that**
- the fixing eyelet (3) is preferably produced from a strip of flat material by means of rolling or bending and comprises a longitudinal joint (4) which opens outwards in a V-shaped manner,
- the base (1) comprises a transversely-extending W-shaped groove which is composed of two rounded edges (5, 6) and whose depth and central elevation (7) are dimensioned such that the fixing eyelet (3) is supported on the lateral edges (8, 9) of the W-shaped groove, and
- the V-shaped longitudinal joint (4) of the fixing eyelet (3) is located centrally or almost centrally over the central elevation (7) of the W-shaped groove.

5. Structural system as claimed in Claim 4, **characterised in that** the rounded edges (5, 6) of the W-shaped groove are formed by radii, preferably radii having the same curvature.

## Revendications

1. Procédé pour joindre un oeillet de fixation (3) au pied (1) d'un amortisseur par soudage, **caractérisé en ce que**, avant soudage
- l'oeillet de fixation (3) est produit de préférence par roulage ou cintrage à partir d'un matériau plat en bande, et présente un joint longitudinal (4) en V ouvert vers l'extérieur,
- le pied (1) présente une rainure transversale en W formée par deux arrondis (5, 6) côte à côte, dont la profondeur et la saillie médiane (7) sont telles que l'oeillet de fixation (3) repose sur les bords latéraux (8, 9) de la rainure en W, et
- le joint longitudinal en V (4) de l'oeillet de fixation (3) se trouve au centre, ou sensiblement au centre, au dessus de la saillie médiane (7) de la rainure en W.

2. Procédé selon la revendication 1, **caractérisé en ce que** le soudage se fait par soudage par résistance et pression.

3. Procédé selon la revendication 1 ou la revendication 2, **caractérisé en ce que** les arrondis (5, 6) de la rainure en W sont formés par des rayons, de préférences des rayons de même courbure.

4. Système constructif comprenant un oeillet de fixation (3) et un amortisseur avec un pied (1) dont la forme de la section est adaptée à la forme de l'oeillet de fixation (3), **caractérisé en ce que**
- l'oeillet de fixation (3) est produit de préférence par roulage ou cintrage à partir d'un matériau plat en bande, et présente un joint longitudinal (4) en V ouvert vers l'extérieur,
- le pied (1) présente une rainure transversale en W formée par deux arrondis (5,6) côte à côte, dont la profondeur et la saillie médiane (7) sont telles que l'oeillet de fixation (3) repose sur les bords latéraux (8, 9) de la rainure en W, et
- le joint longitudinal en V (4) de l'oeillet de fixation (3) se trouve au centre, ou sensiblement au centre, au dessus de la saillie médiane (7) de la rainure en W.

5. Système constructif selon la revendication 4, **caractérisé en ce que** les arrondis (5, 6) de la rainure en W sont formés par des rayons, de préférence des rayons de même courbure.
